# EUROPÄISCHE PATENTSCHRIFT

(11) **EP 2 646 952 B1**
(45) Veröffentlichungstag und Bekanntmachung des Hinweises auf die Patenterteilung: **28.02.2018**
(21) Anmeldenummer: 11794028.8
(22) Anmeldetag: 29.11.2011
(51) Int. Cl.: G06K 19/07, G01L 1/22, G01L 3/00, G06F 3/02

(54) **PORTABLER DATENTRÄGER MIT TASTATUR**
PORTABLE DATA CARRIER WITH KEYBOARD
SUPPORT DE DONNÉES PORTATIF MUNI D'UN CLAVIER

(30) Priorität: 30.11.2010 DE 102010052984
(43) Veröffentlichungstag der Anmeldung: 09.10.2013
(73) Patentinhaber: Giesecke+Devrient Mobile Security GmbH, 81677 München (DE)
(72) Erfinder: BALDISCHWEILER, Michael, 81825 München (DE)
(86) Internationale Anmeldenummer: PCT/EP2011/005985
(87) Internationale Veröffentlichungsnummer: WO 2012/072238

(56) Entgegenhaltungen:
- EP-A1- 0 347 897
- DE-C1- 19 939 347
- US-A- 5 835 977
- US-A1- 2003 016 209
- US-A1- 2004 155 870
- US-A1- 2005 103 114
- US-A1- 2006 176 280
- US-A1- 2007 195 062

## Beschreibung

Die vorliegende Erfindung betrifft einen portablen Datenträger mit einer Vielzahl von als Taste ausgebildeten Bereichen, ein Verfahren zur Herstellung und ein Verfahren zum Betrieb eines solchen portablen Datenträgers.

Portable Datenträger mit Benutzerschnittstellen in Form von Eingabeeinrichtungen sind in verschiedenen Ausführungsformen bekannt. Portable Datenträger im Sinne der vorliegenden Schrift sind beispielsweise Chipkarten, Kreditkarten, Mobilfunkendgeräte, Smartphones und dergleichen. Als Eingabeeinrichtungen sind dabei beispielsweise einfache Taster, Tastenfelder, Tastaturen, Touchpads oder berührungsempfindliche Displays bekannt. Dabei ist es bekannt, Tastenfelder oder Tastaturen in Form von so genannten Folientastaturen auszubilden. Das ortsaufgelöste Erkennen einer Berührung eines Touchpads oder eines berührungsempfindlichen Displays basiert beispielsweise auf kapazitiven, induktiven, optischen oder akustischen Erkennungsverfahren. Solche Eingabeeinrichtungen weisen allgemein den Nachteil auf, dass sie einen aufwändigen Aufbau, eine aufwändige Mechanik und/oder eine aufwändige Auswerteelektronik erfordern, was zum einen die Herstellung solcher Eingabeeinrichtungen verteuert und zum anderen deren Lebensdauer begrenzt. Dies ist besonders problematisch in Datenträgern, die bauartbedingt wenig Bauraum für solche Eingabeeinrichtungen bereitstellen und/ oder in großen Stückzahlen hergestellt werden, wie es beispielsweise bei Chipkarten der Fall ist.

Die Tasten von Tastenfelder und Tastaturen oder auch einzelne Tasten können beispielsweise anhand eines ortsaufgelösten Erkennens eines Drucks auf die Oberfläche solcher portablen Datenträger realisiert werden, wobei einem abgegrenzten Bereich der Oberfläche des Datenträgers eine Taste zugeordnet wird und gegebenenfalls mehrere solcher abgegrenzten Bereiche vorgesehen sind. Alternativ kann für jede Taste ein eigener Signalgeber vorgesehen sein. Solche Signalgeber können beispielsweise als mechanische Taster oder als druckempfindliche Sensoren ausgebildet sein, die einen abgegrenzten Bereich der Oberfläche des Datenträgers als Taste ausbilden. Solche Taster und/ oder Sensoren können mechanisch und/ oder elektrisch unterschiedlich ausgebildet sein. Zum Erkennen einer Betätigung einer Taste, beispielsweise einer Berührung oder einer Ausübung eines Drucks auf die Taste, muss eine Ansteuereinrichtung beispielsweise in Form eines Mikrocontrollers jede Taste, das heißt jeden Taster oder jeden Sensor einzeln und kontinuierlich abfragen, um zu erkennen, ob die jeweilige Taste betätigt wurde oder ob überhaupt nur eine der Tasten der gegebenenfalls mehreren Tasten betätigt wurde. Das kontinuierliche Abfragen der einzelnen Tasten kann alternativ über eine zusätzliche Elektronik realisiert werden, die beim Erkennen des Betätigens einer der Tasten ein geeignetes Signal zu der Ansteuereinrichtung sendet. In jedem Falle werden zur Abfrage und Ansteuerung der verschiedenen Taster und/ oder Sensoren der Tasten des Tastenfeldes zwei Leitungen pro Taste benötigt. Dadurch ergibt sich zum einen ein aufwändiges Abfrage- und Ansteuerverfahren. Zum anderen ergibt sich eine hohe Anzahl von Zuleitungen, was einen kreuzungsfreien Verlauf der Zuleitungen verhindert oder aufwändig machen kann. Die Anzahl der Zuleitungen kann prinzipiell reduziert werden, indem so genannte Dioden-Brücken für Kreuzabfragen eingesetzt werden. Dies erhöht jedoch die Anzahl der notwendigen Bauteile und somit die Herstellungskosten für einen solchen portablen Datenträger, was den Einsatz solcher Dioden-Brücken insbesondere bei Datenträgern, die in großen Stückzahlen hergestellt werden sollen, verhindert. Daher werden beispielsweise für ein numerisches Tastenfeld mit zehn Tasten (Tasten "0" bis "9") elf Zuleitungen benötigt. Je nach Anordnung der Tasten in dem Tastenfeld ist bereits in diesem Fall ein kreuzungsfreies Verlegen der Zuleitungen schwierig oder unmöglich, wodurch beispielsweise so genannte Durchsteiger zum kreuzungsfreien Verlegen benötigt werden. Dies erhöht wiederum den Herstellungsaufwand und erhöht auch die mechanische Aufbauhöhe eines solchen Tastenfeldes, was insbesondere bei flachen portablen Datenträgern wie beispielsweise Chipkarten ungünstig ist.

Aus der US 2006/0176280 A1 ist ein Organizer mit einer Tastatur bekannt, bei der als Sensoren Dehnungsmessstreifen verwendet werden. Bei leichtem berühren der Taste reagiert der Messstreifen, und es wird beispielsweise ein Tonsignal ausgegeben.

Aufgabe der vorliegenden Erfindung ist es daher, einen portablen Datenträger mit einer Vielzahl von als Taste ausgebildeten Bereichen anzugeben, der aufwandsarm hergestellt werden kann und das Erkennen der Betätigung einer Taste vereinfacht.

Diese Aufgabe wird durch die Merkmale der unabhängigen Ansprüche gelöst. Vorteilhafte Ausgestaltungen und Weiterbildungen sind in den abhängigen Ansprüchen angegeben.

Der erfindungsgemäße portable Datenträger weist einen Datenträgerkörper auf, der zum einen eine Sensoranordnung und zum anderen eine Vielzahl von als Taste ausgebildeten Bereichen umfasst. Erfindungsgemäß besteht die Sensoranordnung aus einer Vielzahl von elektrisch hintereinander geschalteten Dehnungsmessstreifen, wobei jedem Bereich der Vielzahl von als Taste ausgebildeten Bereichen jeweils zumindest ein Dehnungsmessstreifen der Sensoranordnung zugeordnet ist.

Im Folgenden werden die als Taste ausgebildeten Bereiche auch als Taste und der Bereich, den eine solche Taste auf der Oberfläche des Datenträgerkörpers des portablen Datenträgers einnimmt, als Tastenbereich bezeichnet. Der zumindest eine, einem gegebenen Tastebereich zugeordnete Dehnungsmessstreifen ist bezüglich des Tastenbereichs derart angeordnet, dass durch einen auf den Tastenbereich geeignet ausgeübten Druck eine Veränderung des elektrischen Widerstandes des dem Tastenbereich zugeordneten Dehnungsmessstreifen resultiert. Vorzugsweise sind die Tastenbereiche auf der Oberfläche des Datenträgerkörpers des portablen Datenträgers jeweils visuell gekennzeichnet. Diese Tastenbereiche sind weiter vorzugsweise deformierbare Bereiche einer ansonsten starren oder zumindest bei gleichem Druck weniger deformierbaren Datenträgeroberfläche.

Dehnungsmessstreifen sind prinzipiell in verschiedenen Bauformen und hergestellt aus verschiedenen Materialien bekannt. Solche Dehnungsmessstreifen sind im einfachsten Fall vornehmlich gegenüber einer Dehnung oder Stauchung in einer Richtung empfindlich, wobei typischerweise eine Mehrzahl schmaler Leiterbahnen, die auch als Leiterbahnstruktur bezeichnet werden, in diese Richtung verläuft. Bei Stauchung oder Dehnung der Dehnungsmessstreifens verändern sich der Querschnitt und die Länge dieser schmalen Leiterbahnen und somit deren elektrischer Widerstand. Üblicherweise sind die schmalen Leiterbahnen der Leiterbahnstruktur eines Dehnungsmessstreifens hintereinander geschaltet, was zu einer mäanderförmigen Leiterbahnstruktur führt, in der die schmalen Leiterbahnen meist parallel angeordnet sind. Neben solchen parallelen Anordnungen von schmalen Leiterbahnen der Leiterbahnstruktur sind auch Dehnungsmessstreifen bekannt, in denen die Leiterbahnstruktur sternförmig oder rosettenartig ausgebildet ist, wobei deren schmale Leiterbahnen radial bezüglich eines vorgegebenen Punktes verlaufen. In der vorliegenden Schrift werden all diese Strukturen aus Gründen der Einfachheit als Dehnungsmessstreifen bezeichnet.

Erfindungsgemäß sind die Dehnungsmessstreifen der Sensoranordnung elektrisch hintereinander geschaltet und mit zwei Endabgriffen versehen.

Dadurch kann bereits mit Hilfe einer einzigen Widerstandsmessung über diese beiden Endabgriffe festgestellt werden, ob eine der Tasten des portablen Datenträgers betätigt wird, das heißt ob auf einen der Tastenbereiche ein geeigneter Druck ausgeübt wird. Weiterhin müssen lediglich zwei Zuleitungen in Form der Endabgriffe vorgesehen werden. Durch die erfindungsgemäße Hintereinanderschaltung der Vielzahl von Dehnungsmessstreifen der Sensoranordnung können alle Tasten des portablen Datenträgers gleichzeitig überwacht werden. Dadurch sinken der für die Überwachung einer solchen Vielzahl von Tasten notwendige Beschaltungs- und Überwachungsaufwand und der damit verbundene Energiebedarf. Die dadurch gewonnene Information, dass zumindest eine der Tasten betätigt wird, kann mit Vorteil für verschiedene Zwecke verwendet werden. Beispielsweise können elektronische Vorrichtungen, die sich gegebenenfalls auf dem portablen Datenträger befinden, aus einem Schlafzustand in einen Betriebszustand versetzt werden und somit ein mit dem Betriebszustand einhergehender erhöhter Energiebedarf auf einen kurzen Zeitraum beschränkt werden. Beispielsweise kann die Beleuchtung einer Anzeigevorrichtung aktiviert werden. Alternativ kann auch ein Erkennungsverfahren gestartet werden, welches erkennt, welche der Tasten der Vielzahl von Tasten betätigt wird. Die erfindungsgemäße Verwendung von hintereinander geschalteten Dehnungsmessstreifen in der erfindungsgemäßen Anordnung macht somit ein ständiges Abfragen aller einzelnen Tasten überflüssig und vereinfacht die Beschaltung.

Eine Ansteuereinrichtung, die den elektrischen Widerstand der Vielzahl von elektrisch hintereinander geschalteten Dehnungsmessstreifen erfasst und dazu mit den Endabgriffen elektrisch verbunden ist, kann auf dem portablen Datenträger oder außerhalb des portablen Datenträgers als externes Bauteil angeordnet sein. Im einfachsten Fall sind die Dehnungsmessstreifen auf der Oberfläche des Datenträgerkörpers des portablen Datenträgers angeordnet.

Vorzugsweise sind die Dehnungsmessstreifen jedoch im Inneren des Datenträgerkörpers angeordnet, womit diese geschützt sind. Dies kann insbesondere bei mehrschichtig aufgebauten Datenträgerkörpern leicht realisiert werden. Bei der Vielzahl von Tasten kann es sich um ein Tastenfeld, eine Tastatur oder um einzelne Tasten handeln, die auf dem Datenträgerkörper beliebig angeordnet sein können.

In einer vorteilhaften Ausgestaltung des erfindungsgemäßen portablen Datenträgers ist jeder Taste, das heißt jedem Bereich der Vielzahl von als Taste ausgebildeten Bereichen, jeweils genau ein Dehnungsmessstreifen der Sensoranordnung zugeordnet. Dadurch wird die Anzahl der Dehnungsmessstreifen in der Sensoranordnung minimiert und entsprechend die Herstellung des Datenträgers vereinfacht und kostengünstiger gestaltet. Eine solche Ausgestaltung ist insbesondere dann vorteilhaft, wenn die Anforderungen an die Empfindlichkeit der Tasten gegenüber einem ausgeübten mechanischen Druck gering sind. In dieser vorteilhaften Ausgestaltung ist es weiterhin von Vorteil, wenn Dehnungsmessstreifen verwendet werden, die eine sternförmig oder rosettenartig ausgebildete Leiterstruktur aufweisen.

In einer vorteilhaften Ausgestaltung werden die Dehnungsmessstreifen der Sensoranordnung auf dem portablen Datenträger als gedruckte oder geätzte elektrisch leitfähige Strukturen ausgebildet. Diese Art der Herstellung der Dehnungsmessstreifen auf dem Datenträgerkörper bietet im Vergleich mit alternativen Möglichkeiten der Anbringung von beispielsweise Foliendehnungsmessstreifen Vorteile bezüglich Kosten, Robustheit und mechanischer Verbindung mit dem Datenträgerkörper. Weiterhin werden vorzugsweise auch die die verschiedenen Dehnungsmessstreifen verbindenden elektrischen Leitungen sowie die Endabgriffe als gedruckte oder geätzte Struktur ausgebildet. Ebenso können auch Teile der Elektronik, die beispielsweise für die Ansteuereinrichtung der Sensoranordnung notwendig ist, als eine solche geätzte oder gedruckte Struktur ausgebildet sein.

Das Aufdrucken kann mit Hilfe einer Maske oder maskenlos geschehen. Dabei wird ein elektrisch leitendes Material auf den Datenträgerkörper des portablen Datenträger oder auf eine Schicht desselben gedruckt. Bei dem elektrisch leitenden Material handelt es sich beispielsweise um ein Metall wie Silber, eine Legierung wie beispielsweise Nickel-Chrom, Konstantan oder Isabellin, um eine nanoskalige Suspension oder um eine funktionelle Tinte. Diese werden beispielsweise im einem Ink-Jet- oder einem Aerosol-Druckverfahren aufgebracht. Alternativ können der erste und der zweite Dehnungsmessstreifen auch durch Ätzen einer elektrisch leitenden Schicht hergestellt werden. Die Verwendung eines aufgedruckten oder geätzten Dehnungsmessstreifens gestattet das Schaffen einer robusten, kostengünstigen Taste mit niedriger Bauhöhe.

In einer weiteren bevorzugten Ausgestaltung des erfindungsgemäßen portablen Datenträgers ist dessen Datenträger mehrschichtig ausgebildet. Dazu können verschiedene Schichten, vorzugsweise aus geeigneten Kunststoffmaterialien, miteinander verbunden, beispielsweise laminiert werden. Um die Sensibilität eines in oder auf dem Datenträgerkörper ein- oder aufgebrachten Dehnungsmessstreifens zu erhöhen, können eine oder mehrere Schichten des Datenträgerkörpers in dem Bereich, in dem in einer nahe benachbarten oder angrenzenden Schicht ein Dehnungsmessstreifen angeordnet ist, mit einer oder mehreren Aussparungen versehen sein. Das heißt, die Aussparungen befinden sich in dem Datenträgerkörper vorzugsweise seitlich und/ oder oberhalb und/oder unterhalb des Dehnungsmessstreifens. Besonders bevorzugt befinden sich seitlich des Dehnungsmessstreifens Aussparungen, während oberhalb und unterhalb des Dehnungsmessstreifens keine Aussparungen vorgesehen sind. Dadurch wird die Empfindlichkeit der Dehnungsmessstreifen erhöht, da sich der Datenträgerkörper entsprechend leichter verformt, der Dehnungsmessstreifen stärker verformt wird und dementsprechend dessen Widerstandsänderung größer ausfällt. Die geschaffene Aussparung kann als Hohlraum ausgestaltet sein oder mit einem flexiblen oder kompressiblen Material vollständig oder teilweise gefüllt sein. Entsprechend kann der Grad der in Folge der Aussparung zusätzlichen Verformung geeignet eingestellt werden.

In einer weiteren vorteilhaften Ausgestaltung des erfindungsgemäßen portablen Datenträgers sind in der Sensoranordnung ein oder mehrere elektrische Zwischenabgriffe vorgesehen. Der oder die Zwischenabgriffe bilden jeweils einen elektrischen Abgriff zwischen zwei vorgegebenen, benachbart angeordneten Dehnungsmessstreifen. Dadurch wird die Vielzahl der Dehnungsmessstreifen der Sensoranordnung in zwei oder mehr, das heißt in eine Vielzahl von Gruppen von Dehnungsmessstreifen aufgeteilt. Im einfachsten Fall ist ein einziger elektrischer Zwischenabgriff vorgesehen, der die Vielzahl der Dehnungsmessstreifen der Sensoranordnung in genau zwei Gruppen aufteilt. Im Allgemeinen teilen n Zwischenabgriffe die Dehnungsmessstreifen der Sensoranordnung in n+1 Gruppen auf. Innerhalb der Gruppen sind die Dehnungsmessstreifen elektrisch hintereinander geschaltet und es ist innerhalb der Gruppen kein weiterer elektrischer Abgriff zwischen den Dehnungsmessstreifen vorgesehen. Über die Zwischenabgriffe kann festgestellt werden, in welcher Gruppe der Vielzahl von Gruppen von Dehnungsmessstreifen eine Taste betätigt wird. Zu diesem Zweck sind beide Endabgriffe und der oder die Zwischenabgriffe mit der Ansteuereinrichtung elektrisch verbunden. Somit kann die Ansteuereinrichtung anhand von geeigneten Widerstandsmessungen zwischen den verschiedenen End- und/ oder Zwischenabgriffen feststellen, in welcher Gruppe eine Taste betätigt wurde. Dies kann beispielsweise durch eine sukzessive Approximation geschehen.

In einer bevorzugten Ausgestaltung sind die Gruppen der Vielzahl von Gruppen von Dehnungsmessstreifen elektrisch identisch aufgebaut, so dass jede Gruppe den gleichen elektrischen Widerstand aufweist, wenn keine der Tasten betätigt wird, das heißt wenn sich alle Dehnungsmessstreifen in ihrem jeweiligen undeformierten Zustand befinden. Dieses vereinfacht das Verfahren zum Auffinden derjenigen Gruppe, in der ein Dehnungsmessstreifen in Folge eines Tastendrucks einen veränderten Widerstandswert aufweist.

In einer besonders bevorzugten Ausgestaltung umfasst jede Gruppe der Vielzahl von Gruppen von Dehnungsmessstreifen genau einen Dehnungsmessstreifen. Entsprechend ist zwischen jedem der hintereinander geschalteten Dehnungsmessstreifen der Sensoranordnung ein Zwischenabgriff vorgesehen. Umfasst die Sensoranordnung somit n hintereinander geschaltete Dehnungsmessstreifen, so sind auf dem Datenträgerkörper des portablen Datenträgers n-1 Zwischenabgriffe und zwei Endabgriffe vorgesehen. Entsprechend gestattet es die erfindungsgemäße Hintereinanderschaltung von n Dehnungsmessstreifen lediglich n+1 Abgriffe vorzusehen, was eine deutliche Reduzierung der Anzahl der Abgriffe gegenüber der bekannten Beschaltung mit 2n Abgriffen gestattet und entsprechend eine Vereinfachung der Ansteuervorrichtung, des Ansteuerverfahrens und der Anordnung der Zuleitungen gestattet. Weiterhin stehen somit n+1 elektrische Abgriffe zur Verfügung, über die die elektrischen Widerstände der Dehnungsmessstreifen der Sensoranordnung bestimmt werden können. Vorzugsweise sind dabei alle Dehnungsmessstreifen der Sensoranordnung elektrisch identisch aufgebaut, das heißt sie weisen im undeformierten Zustand jeweils den gleichen elektrischen Widerstand auf und verändern zudem ihren elektrischen Widerstand beim Betätigen der jeweils zugeordneten Taste in identischer Art und Weise.

Die Bestimmung, welche der Tasten betätigt wurde und welcher der Dehnungsmessstreifen einen entsprechend veränderten elektrischen Widerstand aufweist, kann nun derart geschehen, dass der Widerstand der einzelnen Dehnungsmessstreifen der Sensoranordnung erfasst wird, indem sukzessive der elektrische Widerstand zwischen zwei jeweils benachbarten Abgriffen bestimmt wird. Umfasst die Sensoranordnung n Dehnungsmessstreifen, so sind die Mittel n/2 Widerstandsmessungen nötig, um den Dehnungsmessstreifen mit dem veränderten Widerstandswert und entsprechend die betätigte Taste zu bestimmen.

Alternativ kann die Methode der sukzessiven Approximation verwendet werden, um zu bestimmen, welcher Dehnungsmessstreifen einen veränderten Widerstandswert besitzt. Bei dieser iterativen Methode wird in einem ersten Schritt der Widerstandswert einer ersten Hälfte und einer zweiten Hälfte der Sensoranordnung erfasst, indem der Widerstandswert zwischen einem in der Sensoranordnung vorzugsweise mittig angeordneten Zwischenabgriff und einem der beiden Endabgriffen erfasst wird. Dadurch kann entschieden werden, in welcher der beiden Hälften der Sensoranordnung sich der Dehnungsmessstreifen mit dem veränderten Widerstandswert befindet. In einem weiteren Schritt wird diejenige Hälfte der Sensoranordnung, in der sich der Dehnungsmessstreifen mit dem veränderten Widerstandswert befindet, wiederum in zwei Hälften aufgeteilt und die entsprechenden Widerstandswerte bestimmt. Das Verfahren wird solange weitergeführt, bis der Dehnungsmessstreifen mit dem veränderten Widerstandswert bestimmt ist. Dadurch ist es möglich, in Sensoranordnungen mit 2^{m} hintereinander geschalteten Dehnungsmessstreifen bereits mit Hilfe von m Widerstandsmessungen denjenigen Dehnungsmessstreifen zu bestimmen, der einen veränderten Widerstandswert aufweist. Entsprechend gestattet das iterative Verfahren der sukzessiven Approximation eine deutliche Reduzierung der Anzahl der notwendigen Widerstandsmessungen gegenüber dem zuvor besprochenen sukzessiven Verfahren.

In einer alternativen Ausgestaltung des portablen Datenträgers befinden sich zwischen zwei benachbarten Abgriffen, das heißt in wenigstens einer vorbestimmten Gruppe der Vielzahl von Gruppen von Dehnungsmessstreifen, mehrere Dehnungsmessstreifen, welche voneinander verschiedene elektrische Eigenschaften aufweisen. Dadurch wird die Anzahl der Zwischenabgriffe und die Anzahl der Gruppen reduziert werden. Besonders bevorzugt sind alle Gruppen der Vielzahl von Gruppen von Dehnungsmessstreifen elektrisch identisch aufgebaut und weisen entsprechend jeweils mehrere Dehnungsmessstreifen auf.

Die Verfahren zur Bestimmung des Dehnungsmessstreifens mit verändertem Widerstandswert, die im Zusammenhang mit der zuvor beschriebenen Ausgestaltung der Sensoranordnung beschrieben wurden, können auch auf diese alternative Ausgestaltung angewendet werden, wodurch diejenige Gruppe, in der sich der Dehnungsmessstreifen mit dem veränderten Widerstandswert befindet, bestimmt werden kann. Anschließend kann innerhalb der derart bestimmten Gruppe von Dehnungsmessstreifen anhand der verschiedenen elektrischen Eigenschaften der mehreren Dehnungsmessstreifen dieser Gruppe bestimmt werden, welcher der Dehnungsmessstreifen einen veränderten elektrischen Widerstand aufweist. Dabei unterscheiden sich die einer Gruppe zugeordneten mehreren Dehnungsmessstreifen wenigstens in dem Betrag, um den sich der elektrische Widerstand der Dehnungsmessstreifen bei Betätigung der jeweiligen Taste ändert. Bei Anwendung der oben beschriebenen sukzessiven Approximation zur Bestimmung derjenigen Gruppe, in der sich der Dehnungsmessstreifen mit dem veränderten Widerstandswert befindet, ist es zudem von Vorteil, wenn sich der Widerstandswert der Dehnungsmessstreifen auch im undeformierten Zustand der Dehnungsmessstreifen deutlich unterscheidet. Dies kann beispielsweise durch Verwendung verschiedener Materialien und/ oder verschiedener Leiterbahnstrukturen zur Ausbildung der mehreren Dehnungsmessstreifen einer Gruppe von Dehnungsmessstreifen realisiert werden.

Weist eine Gruppe von Dehnungsmessstreifen beispielsweise zwei Dehnungsmessstreifen auf, so kann der eine Dehnungsmessstreifen aus Silber und der andere Dehnungsmessstreifen aus Konstantan aufgebaut sein. Dabei kann bei im Wesentlichen identischer räumlicher Ausgestaltung der beiden Dehnungsmessstreifen im Falle von Silber im unausgelenkten Zustand ein Widerstandswert von beispielsweise 350 Ohm realisiert werden, während der entsprechende Dehnungsmessstreifen aus Konstantan einen entsprechenden Widerstandswert von 1000 Ohm zeigt. Ebenso verändert sich bei einer Betätigung der Taste der Widerstandswert des Dehnungsmessstreifens aus Silber beispielsweise um 120 Ohm, während sich der Widerstandswert des Dehnungsmessstreifens aus Konstantan entsprechend um 1000 Ohm ändert. Somit kann anhand einer quantitativen Erfassung des Widerstandswertes der Gruppe erkannt werden, welcher der beiden Dehnungsmessstreifen einen veränderten Widerstand aufweist.

Neben den bereits zuvor besprochenen verschiedenen Materialien, die zur Ausbildung von gedruckten oder geätzten Dehnungsmessstreifen in Frage kommen, können alternativ oder zusätzlich für die mehreren Dehnungsmessstreifen einer Gruppe von Dehnungsmessstreifen auch verschiedene räumliche und/ oder geometrische Ausgestaltungen der Leiterbahnstruktur vorgesehen sein. Beispielsweise können die schmalen Leiterbahnen der Leiterbahnstruktur mit unterschiedlichem Querschnitt und mit unterschiedlicher Länge ausgeführt werden. Auch dadurch können - auch bei Verwendung des gleichen Materials - verschiedene Widerstandswerte und verschiedene Widerstandsänderungen für die mehreren Dehnungsmessstreifen realisiert werden. Zudem kann auch statt einer linearen Leiterbahnstruktur eine sternförmige oder rosettenartige Leiterbahnstruktur verwendet werden.

In einer alternativen Ausgestaltung des portablen Datenträgers sind keine Zwischenabgriffe in der Sensoranordnung vorgesehen. Die Sensoranordnung weist lediglich die beiden Endabgriffe auf und besteht somit aus einer einzigen Gruppe von Dehnungsmessstreifen, wie sie in den vorherigen Ausgestaltungen definiert wurde. In dieser Ausgestaltung weisen alle Dehnungsmessstreifen der Sensoranordnung jeweils voneinander verschiedene elektrische Eigenschaften auf. Dies kann wie oben beschrieben durch die Verwendung verschiedener Materialien und/ oder durch die Verwendung verschiedener Ausgestaltungen der Leiterbahnstrukturen der Dehnungsmessstreifen realisiert werden.

In einer weiteren bevorzugten Ausgestaltung weist der Datenträgerkörper weiterhin eine Kompensationsanordnung auf. Diese ist elektrisch identisch zu der Sensoranordnung aufgebaut, wobei die Kompensationsanordnung - gegebenenfalls im Gegensatz zu der Sensoranordnung - keine Zwischenabgriffe, sondern lediglich die beiden Endabgriffe aufweist. Die Kompensationsanordnung weist entsprechend die gleiche Vielzahl von Dehnungsmessstreifen wie die Sensoranordnung auf, wobei die sich jeweils entsprechenden Dehnungsmessstreifen von Kompensationsanordnung und Sensoranordnung identisch aufgebaut sind. Die Dehnungsmessstreifen der Kompensationsanordnung sind von den Tastenbereichen des Datenträgerkörpers beabstandet angeordnet, so dass bei einem Betätigen einer Taste sich nur der Widerstandswert des der Taste zugeordneten Dehnungsmessstreifens der Sensoranordnung ändert, nicht jedoch der Widerstandswert des entsprechenden Dehnungsmessstreifens der Kompensationsanordnung.

Mit Hilfe einer solchen Kompensationsanordnung können Veränderungen des elektrischen Widerstands der Dehnungsmessstreifen, die nicht auf einen Tastendruck zurückzuführen sind, kompensiert werden, wie Widerstandsänderungen, die zurückzuführen sind auf eine Temperaturänderung, auf das Vorliegen externer Felder oder auch auf ein Verformen des gesamten Datenträgerkörpers des portablen Datenträgers. Entsprechend kann das Betätigen einer Taste auch bei Vorliegen solcher, den Widerstandswert von Dehnungsmessstreifen verändernden Einflüssen, sicher erkannt werden.

Ausführungsbeispiele und Vorteile der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Die Figuren zeigen:
- Figur 1: eine Chipkarte mit einem Tastenfeld; und
- Figuren 2 bis 4: eine schematische Darstellung von drei Ausführungsbeispielen eines Tastenfelds.

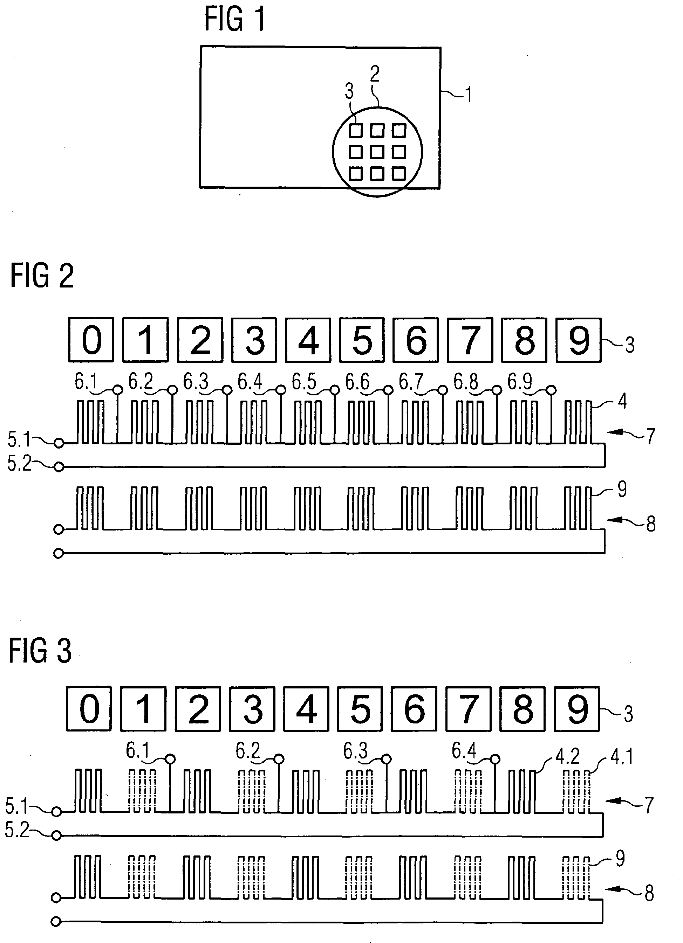

In Figur 1 ist ein portabler Datenträger 1 mit einem Datenträgerkörper in Form einer Chipkarte dargestellt. Der portable Datenträger 1 umfasst ein Tastenfeld 2 mit Tasten bzw. Tastenbereichen 3. Die Tastenbereiche 3 sind auf der Oberfläche des Datenträgerkörpers des portablen Datenträgers 1 visuell gekennzeichnet und umfassen eine Sensoranordnurig 7 mit hintereinander geschalteten druckempfindlichen Sensoren in Form von Dehnungsmessstreifen 4, welche innerhalb dieser Tastenbereiche 3 oder in unmittelbarer Nähe dazu angeordnet sind. Bei Ausübung eines Drucks auf einen dieser Tastenbereiche 3, das heißt bei Betätigen der entsprechenden Taste, verändert sich der Widerstandswert des dem Tastenbereich 3 der betätigten Taste zugeordneten Dehnungsmessstreifens 4. Dazu können die Tastenbereiche 3 deformierbare Bereiche in einer ansonsten starren Oberfläche des Datenträgerkörpers sein.

In Figur 2 ist ein erstes Ausführungsbeispiel des Tastenfeldes 2 schematisch dargestellt. Auf dem Datenträgerkörper des portablen Datenträgers 1 sind zehn Tastenbereiche 3 angeordnet, die mit den Ziffern "0" bis "9" versehen sind. Den Tastenbereichen 3 ist jeweils ein Dehnungsmessstreifen 4 zugeordnet. Der Dehnungsmessstreifen 4 eines gegebenen Tastenbereichs 3 kann innerhalb des zugeordneten Tastenbereichs 3 angeordnet sein oder in unmittelbarer Nähe dazu, so dass der Dehnungsmessstreifen 4 bei Ausüben eines Drucks auf den zugeordneten Tastenbereich 3 derart verformt wird, dass das Betätigen der Taste anhand einer Änderung des elektrischen Widerstands des Dehnungsmessstreifens 4 erkannt werden kann. Die zehn Dehnungsmessstreifen 4 sind elektrisch hintereinander geschaltet und mit Endabgriffen 5.1, 5.2 versehen. Zwischen den zehn Dehnungsmessstreifen 4 sind insgesamt neun Zwischenabgriffe 6.1 bis 6.9 vorgesehen. Die zehn Dehnungsmessstreifen 4 sind identisch ausgebildet und bestehen aus einer aufgedruckten Silberstruktur. Die Strukturen der Dehnungsmessstreifen 4 können auf die Oberfläche des Datenträgerkörpers aufgedruckt sein. Ist der Datenträgerkörper mehrschichtig ausgebildet, können die Dehnungsmessstreifen 4 auch innerhalb des Datenträgerkörpers vorgesehen sein. Die Endabgriffe 5.1, 5.2 und die Zwischenabgriffe 6.1 bis 6.9 sind mit einer nicht dargestellten Ansteuereinrichtung elektrisch verbunden, die die Widerstandsmessungen in der Sensoranordnung 7 durchführen kann.

Wird eine der Tasten betätigt, indem auf einen der Tastenbereiche 3 ein mechanischer Druck ausgeübt wird, so verändert sich der elektrische Widerstand des zugehörigen Dehnungsmessstreifens 4 und entsprechend der elektrische Gesamtwiderstand der Sensoranordnung 7, der über die Endabgriffe 5.1, 5.2 erfasst werden kann. Die nicht dargestellte Ansteuereinrichtung erfasst kontinuierlich den elektrischen Gesamtwiderstand der zehn Dehnungsmessstreifen 4, die die Sensoranordnung 7 bilden. Wird entsprechend erkannt, dass eine der Tasten 3 betätigt wird, so beginnt die Steuereinrichtung ein nachfolgendes Erkennungsverfahren, in welchem durch sukzessive Approximation festgestellt wird, welche der Tasten betätigt wird.

Im Folgenden wird angenommen, dass die Taste mit der Ziffer "3" betätigt wird. In einem ersten Schritt wird die Sensoranordnung 7 der zehn Dehnungsmessstreifen 4 in eine erste und eine zweite Gruppe unterteilt und der elektrische Gesamtwiderstand der ersten Gruppe bestimmt, indem der elektrische Gesamtwiderstand zwischen dem Endabgriff 5.1 und dem mittig gelegenen Zwischenabgriff 6.5 bestimmt wird. Da die Taste "3" betätigt wird, ist dieser elektrische Widerstand zwischen dem Endabgriff 5.1 und dem Zwischenabgriff 6.5 verändert. Dadurch wird erkannt, dass eine der Tasten "0" bis "4" betätigt wird. In einem weiteren iterativen Schritt wird diese Gruppe von Tasten "0" bis "4" weiter unterteilt, indem der elektrische Widerstand zwischen dem Endabgriff 5.1 und dem Zwischenabgriff 6.3 bestimmt wird. Dieser elektrische Widerstand ist unverändert. Entsprechend wird erkannt, dass eine der beiden Tasten "3" oder "4" betätigt wird. In einem weiteren iterativen Schritt wird der elektrische Widerstand zwischen den Zwischenabgriffen 6.3 und 6.4 bestimmt. Da die Taste "3" betätigt wird, ist dieser Widerstand gegenüber dem Widerstand eines Dehnungsmessstreifens im undeformierten Zustand verändert. Entsprechend wird erkannt, dass die Taste "3" betätigt wird. In dem beschriebenen Beispiel wurde nach drei Widerstandsmessungen die betätigte Taste bestimmt. Allgemein, kann im Fall von zehn Tasten "3" nach höchstens vier Widerstandsmessungen die betätigte Taste bestimmt werden.

In dem in Figur 2 dargestellten Ausführungsbeispiel ist auf oder in dem portablen Datenträger 1 weiterhin eine Kompensationsanordnung 8 vorgesehen, die identisch zu der Sensoranordnung 7 der zehn Dehnungsmessstreifen 4 ausgebildet ist, das heißt sie besteht ebenfalls aus einer aufgedruckten Silberstruktur und umfasst zehn Dehnungsmessstreifen 9. Die Kompensationsanordnung 8 unterscheidet sich von der Sensoranordnung 7 lediglich in der Positionierung der Dehnungsmessstreifen 9 innerhalb des portablen Datenträgers 1 und in dem Verzicht auf Zwischenabgriffe. Die Dehnungsmessstreifen 9 der Kompensationsanordnung 8 sind von den Tastenbereichen 3 auf dem portablen Datenträger 1 beabstandet angeordnet, so dass sich der elektrische Widerstand der Dehnungsmessstreifen 9 der Kompensationsanordnung 8 bei Betätigung einer Taste nicht verändert. Bei anderweitigen Einflüssen, die den elektrischen Widerstand von Dehnungsmessstreifen verändern, wie beispielsweise einer veränderten Temperatur, externen Feldern oder einer Verformung, wie einem Durchbiegen des Datenträgerkörpers des portablen Datenträgers 1, verändert sich der Widerstand der Kompensationsanordnung 8 identisch zu dem Widerstand der Sensoranordnung 7. Entsprechend können Widerstandsänderungen der Sensoranordnung 7, die auf ein Betätigen einer der Tasten 3 zurückzuführen sind, sicher von Widerstandsänderungen der Sensoranordnung 7, die auf anderweitige Einflüsse zurückzuführen sind, unterschieden werden.

In Figur 3 ist ein zweites Ausführungsbeispiel des Tastenfeldes 2 schematisch dargestellt. Das zweite Ausführungsbeispiel unterscheidet sich von dem ersten Ausführungsbeispiel darin, dass zwei verschiedene Arten von Dehnungsmessstreifen 4.1 und 4.2 in der Sensoranordnung 7 vorgesehen sind. Diese beiden Arten von Dehnungsmessstreifen sind in dem zweiten Ausführungsbeispiel alternierend innerhalb der Sensoranordnung 7 angeordnet. In dem vorliegenden Ausführungsbeispiel bestehen die beiden Dehnungsmessstreifen 4.1 und 4.2 aus zwei verschiedenen Materialien. Der Dehnungsmessstreifen 4.1 besteht aus Silber, während der Dehnungsmessstreifen 4.2 aus Konstantan besteht. Entsprechend unterscheidet sich der elektrische Widerstand der beiden Dehnungsmessstreifen 4.1 und 4.2 bereits im undeformierten Zustand der Dehnungsmessstreifen 4.1, 4.2. Während der Dehnungsmessstreifen 4.1 aus Silber einen Widerstandswert von 350 Ohm zeigt, besitzt der Dehnungsmessstreifen 4.2 aus Konstantan einen Widerstandswert von 2000 Ohm. Weiterhin unterscheiden sich die Beträge, um die sich der Widerstandswert beim Betätigen einer Taste ändert. Während sich der Widerstandswert des Dehnungsmessstreifens 4.1 aus Silber um 120 Ohm ändert, ändert sich der Widerstandswert des Dehnungsmessstreifens 4.2 aus Konstantan um 1000 Ohm. Alternativ können statt Silber und Konstantan auch andere geeignete elektrisch leitende Materialien verwendet werden. Statt verschiedener Materialien können die Leiterbahnstrukturen der Dehnungsmessstreifen 4.1 und 4.2 auch geometrisch unterschiedlich ausgebildet sein, so dass sich entsprechend unterschiedliche Veränderungen des elektrischen Widerstandes bei Betätigen einer Taste ergeben.

Jeweils zwei benachbarte Dehnungsmessstreifen 4.1, 4.2 bilden eine Gruppe von Dehnungsmessstreifen, die durch Zwischenabgriffe 6.1 bis 6.4 unterteilt sind. Wie im vorherigen Beispiel kann durch Erfassen des Gesamtwiderstandes der Sensoranordnung 7 über die Endabgriffe 5.1 und 5.2 bestimmt werden, ob eine der Tasten "0" bis "9" betätigt wird. In einem weiteren Schritt kann anhand des zuvor beschriebenen Verfahrens der sukzessiven Approximation festgestellt werden, in welcher der Gruppen eine Taste betätigt wird. Da die Anzahl der Gruppen geringer ist als die Anzahl der Dehnungsmessstreifen, kann mit entsprechend weniger iterativen Schritten der sukzessiven Approximation festgestellt werden, in welcher der Gruppen eine Taste betätigt wird. Anschließend kann in der derart identifizierten Gruppe anhand der quantitativen Veränderung des elektrischen Widerstandes (beispielsweise 120 Ohm oder 1000 Ohm) leicht festgestellt werden, welcher der beiden Dehnungsmessstreifen einen veränderten elektrischen Widerstand zeigt und entsprechend welche Taste betätigt wird.

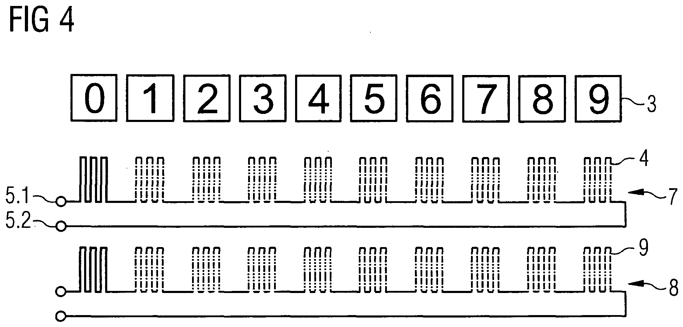

In Figur 4 ist ein drittes Ausführungsbeispiel dargestellt. Es unterscheidet sich von den vorhergehenden Ausführungsbeispielen darin, dass keine Zwischenabgriffe vorgesehen sind. Dagegen ist jeder der zehn Dehnungsmessstreifen 4 elektrisch unterschiedlich ausgebildet, so dass jeder der Dehnungsmessstreifen bei Betätigen der jeweiligen Taste eine quantitativ unterscheidbare Veränderung des elektrischen Widerstandes zeigt. Entsprechend kann bereits durch Erfassen des elektrischen Gesamtwiderstandes über die Endabgriffe 5.1 und 5.2 nicht nur festgestellt werden, ob eine der Taste betätigt wird, sondern auch welche der Tasten betätigt wird. Um die verschiedenen Dehnungsmessstreifen 4 unterschiedlich auszubilden, können wie bereits beschrieben verschiedene Materialien verwendet werden und/ oder verschiedene geometrische Ausgestaltungen der Leiterbahnstruktur der Dehnungsmessstreifen 4 vorgesehen sein. In dem dritten Ausführungsbeispiel ist die Durchführung einer sukzessiven Approximation nicht notwendig. Dies vereinfacht die Ausgestaltung der Ansteuereinrichtung.

## Patentansprüche

1. Portabler Datenträger (1) mit einem Datenträgerkörper, umfassend eine Sensoranordnung (7) mit einer Vielzahl von Dehnungsmessstreifen (4, 4.1, 4.2) und einer Vielzahl von als Taste ausgebildeten Bereichen (3), denen jeweils zumindest ein Dehnungsmessstreifen (4, 4.1, 4.2) der Sensoranordnung (7) zugeordnet ist, **dadurch gekennzeichnet, dass** die Dehnungsmessstreifen (4, 4.1, 4.2) in Serie geschaltet sind,
dass zur Temperaturkompensation eine Kompensationsanordnung (8) vorgesehen ist, und
dass in der Sensoranordnung (7) ein oder mehrere elektrische Zwischenabgriffe (6.1 - 6.9) vorgesehen sind, derart,
dass die Dehnungsmessstreifen (4, 4.1, 4.2) der Sensoranordnung (7) in eine Vielzahl von Gruppen von Dehnungsmessstreifen unterteilt sind,
wobei die Anzahl der Gruppen die Anzahl der Zwischenabgriffe (6.1- 6.9) um eins übersteigt, und wobei
entweder jede Gruppe genau einen Dehnungsmessstreifen (4, 4.1, 4.2) umfasst, oder zumindest einer vorbestimmten Gruppe der Vielzahl von Gruppen von Dehnungsmessstreifen mehrere Dehnungsmessstreifen (4, 4.1, 4.2) zugeordnet sind, wobei die mehreren Dehnungsmessstreifen (4, 4.1, 4.2) der vorbestimmten Gruppe voneinander verschiedene elektrische Eigenschaften aufweisen und aus verschiedenen Materialien bestehen.

2. Portabler Datenträger (1) nach Anspruch 1, **dadurch gekennzeichnet, dass** die Gruppen der Vielzahl von Gruppen von Dehnungsmessstreifen identische elektrische Eigenschaften aufweisen.

3. Portabler Datenträger (1) nach Anspruch 1 oder 2, **dadurch gekennzeichnet, dass** jedem Bereich (3) der Vielzahl von als Taste ausgebildeten Bereichen jeweils genau ein Dehnungsmessstreifen (4, 4.1, 4.2) der Sensoranordnung (7) zugeordnet ist.

4. Portabler Datenträger (1) nach einem der Ansprüche 1 bis 3, **dadurch gekennzeichnet, dass** die Dehnungsmessstreifen (4, 4.1, 4.2) der Sensoranordnung (7) als gedruckte oder geätzte Strukturen ausgebildet sind.

5. Portabler Datenträger (1) nach einem der Ansprüche 1 bis 4, **dadurch gekennzeichnet, dass** der Datenträgerkörper mehrschichtig aufgebaut ist und zumindest eine Schicht des Datenträgerkörpers seitlich und/oder oberhalb und/ oder unterhalb der Dehnungsmessstreifen (4, 4.1, 4.2) der Sensoranordnung (7) eine Aussparung aufweist, die mit einem kompressiblen Material teilweise oder vollständig gefüllt ist.

6. Portabler Datenträger (1) nach einem der vorhergehenden Ansprüche, **dadurch gekennzeichnet, dass** der Datenträgerkörper weiterhin eine Kompensationsanordnung (8) aufweist, die mit der Sensoranordnung (7) identische elektrische Eigenschaften besitzt und die gleiche Vielzahl von Dehnungsmessstreifen (9) wie die Sensoranordnung (7) aufweist, wobei die Dehnungsmessstreifen (9) der Kompensationsanordnung (8) von der Vielzahl von als Taste ausgebildeten Bereichen (3) beabstandet angeordnet sind.

7. Verfahren zum Betrieb eines portablen Datenträgers (1) mit den Schritten:
- Bereitstellen eines Datenträgers nach Anspruch 1,
- Erfassen des elektrischen Widerstands der Sensoranordnung (7),
- Bestimmen, ob ein Druck auf einen Bereich (3) der Vielzahl von als Taste ausgebildeten Bereichen ausgeübt wird anhand einer Veränderung des elektrischen Widerstands der Sensoranordnung (7),
- Bestimmen desjenigen Bereichs (3) der Vielzahl von als Taste ausgebildeten Bereichen, auf den der Druck ausgeübt wird.

8. Verfahren nach Anspruch 7, **dadurch gekennzeichnet, dass** das Bestimmen desjenigen Bereichs (3) der Vielzahl von als Taste ausgebildeten Bereichen, auf den der Druck ausgeübt wird, durch eine sukzessive Approximation und/oder durch eine Auswertung der Veränderung des elektrischen Widerstands der Sensoranordnung (7) oder einer Gruppe von Dehnungsmessstreifen (4, 4.1, 4.2) der Sensoranordnung (7) erfolgt.

## Claims

1. A portable data carrier (1) having a data carrier body, comprising a sensor arrangement (7) with a plurality of strain gauges (4, 4.1, 4.2) and a plurality of regions (3) formed as keys to each of which there is allocated at least one strain gauge (4. 4.1, 4.2) of the sensor arrangement (7), **characterized in that**
the strain gauges (4, 4.1, 4.2) are connected in series, that for temperature compensation a compensation arrangement (8) is provided, and
that in the sensor arrangement (7) one or several electrical intermediate taps (6.1 - 6.9) are provided, such that
the strain gauges (4, 4.1, 4.2) of the sensor arrangement (7) are subdivided into a plurality of groups of strain gauges,
wherein the number of groups exceeds the number of intermediate taps (6.1 - 6.9) by one, and wherein
either each group comprises exactly one strain gauge (4, 4.1, 4.2) or several strain gauges (4, 4.1, 4.2) are allocated to at least one predetermined group of the plurality of groups of strain gauges, wherein the several strain gauges (4, 4.1, 4.2) of the predetermined group have mutually different electrical properties and consist of different materials.

2. The portable data carrier (1) according to claim 1, **characterized in that** the groups of the plurality of groups of strain gauges have identical electrical properties.

3. The portable data carrier (1) according to claim 1 or 2, **characterized in that** to each region (3) of the plurality of regions formed as a key there is allocated respectively exactly one strain gauge (4, 4.1, 4.2) of the sensor arrangement (7).

4. The portable data carrier (1) according to any of the claims 1 to 3, **characterized in that** the strain gauges (4, 4.1, 4.2) of the sensor arrangement (7) are formed as printed or etched structures.

5. The portable data carrier (1) according to any of the claims 1 to 4, **characterized in that** the data carrier body has a multilayer structure and at least one layer of the data carrier body has a recess on the side of and/or above and/or below the strain gauges (4, 4.1. 4.2) of the sensor arrangement (7), which recess is filled partially or completely with a compressible material.

6. The portable data carrier (1) according to any of the preceding claims, **characterized in that** the data carrier body further has a compensation arrangement (8) having electrical properties identical to those of the sensor arrangement (7) and having the same plurality of strain gauges (9) as the sensor arrangement (7), wherein the strain gauges (9) of the compensation arrangement (8) are arranged spaced apart from the plurality of regions (3) formed as a key.

7. A method for operating a portable data carrier (1) having the steps of:
- making available a data carrier according to claim 1,
- detecting the electrical resistance of the sensor arrangement (7),
- ascertaining whether a pressure is exerted on a region (3) of the plurality of regions formed as a key on the basis of a change of the electrical resistance of the sensor arrangement (7),
- ascertaining that region (3) of the plurality of regions formed as a key on which the pressure is exerted.

8. The method according to claim 7, **characterized in that** the ascertaining of that region (3) of the plurality of regions formed as a key on which the pressure is exerted is effected by a successive approximation and/or by an evaluation of the change of the electrical resistance of the sensor arrangement (7) or of a group of strain gauges (4. 4.1. 4.2) of the sensor arrangement (7).

## Revendications

1. Support de données (1) portable ayant un corps de support de données, comprenant un agencement de capteurs (7) ayant une pluralité de jauges extensométriques (4, 4.1, 4.2) et une pluralité de zones (3) réalisées sous forme de touche, auxquelles respectivement au moins une jauge extensométrique (4, 4.1, 4.2) de l'agencement de capteurs (7) est affectée , **caractérisé en ce que** les jauges extensométriques (4, 4.1, 4.2) sont reliées en série,
**que**, pour la compensation de température, un agencement de compensation (8) est prévu, et
**que**, dans l'agencement de capteurs (7), une ou plusieurs prises électriques intermédiaires (6.1 - 6.9) sont prévues, de telle sorte,
**que** les jauges extensométriques (4, 4.1, 4.2) de l'agencement de capteurs (7) sont subdivisées en une pluralité de groupes de jauges extensométriques,
cependant que le nombre des groupes dépasse de un le nombre des prises intermédiaires (6.1 - 6.9), et cependant que
soit chaque groupe comprend exactement une jauge extensométrique (4, 4.1, 4.2), soit, à au moins un groupe prédéterminé de la pluralité de groupes de jauges extensométriques, plusieurs jauges extensométriques (4, 4.1, 4.2) sont affectées, cependant que les plusieurs jauges extensométriques (4, 4.1, 4.2) du groupe prédéterminé présentent des propriétés électriques différentes les unes des autres et consistent en des matériaux différents.

2. Support de données portable (1) selon la revendication 1, **caractérisé en ce que** les groupes de la pluralité de groupes de jauges extensométriques présentent des propriétés électriques identiques.

3. Support de données portable (1) selon la revendication 1 ou 2, **caractérisé en ce que,** à chaque zone (3) de la pluralité de zones réalisées sous forme de touche, respectivement exactement une jauge extensométrique (4, 4.1, 4.2) de l'agencement de capteurs (7) est affectée.

4. Support de données portable (1) selon une des revendications de 1 à 3, **caractérisé en ce que** les jauges extensométriques (4, 4.1, 4.2) de l'agencement de capteurs (7) sont réalisées sous forme de structures imprimées ou gravées.

5. Support de données portable (1) selon une des revendications de 1 à 4, **caractérisé en ce que** le corps de support de données est constitué de plusieurs couches et **en ce qu'**au moins une couche du corps de support de données comporte latéralement aux et/ou au-dessus et/ou au-dessous des jauges extensométriques (4, 4.1, 4.2) de l'agencement de capteurs (7) un évidement rempli partiellement ou entièrement d'un matériau compressible.

6. Support de données portable (1) selon une des revendications précédentes, **caractérisé en ce que** le corps de support de données comporte en outre un agencement de compensation (8) qui, par rapport à l'agencement de capteurs (7), possède des propriétés électriques identiques et présente la même pluralité de jauges extensométriques (9) que l'agencement de capteurs (7), cependant que les jauges extensométriques (9) de l'agencement de compensation (8) sont agencées de manière espacée de la pluralité de zones (3) réalisées sous forme de touche.

7. Procédé de fonctionnement d'un support de données portable (1), comportant les étapes :
- mise à disposition d'un support de données selon la revendication 1,
- saisie de la résistance électrique de l'agencement de capteurs (7),
- détermination de si une pression est exercée sur une zone (3) de la pluralité de zones (3) réalisées sous forme de touche, au moyen d'une modification de la résistance électrique de l'agencement de capteurs (7),
- détermination de la zone (3), de la pluralité de zones réalisées sous forme de touche, sur laquelle la pression est exercée.

8. Procédé selon la revendication 7, **caractérisé en ce qu** la détermination de la zone (3), de la pluralité de zones réalisées sous forme de touche, sur laquelle la pression est exercée a lieu par une approximation successive et/ou par une évaluation de la modification de la résistance électrique de l'agencement de capteurs (7) ou d'un groupe de jauges extensométriques (4, 4.1, 4.2) de l'agencement de capteurs (7).
